(19) Europäisches Patentamt / European Patent Office / Office européen des brevets

(11) EP 1 443 684 B1

(12) **EUROPEAN PATENT SPECIFICATION**

(45) Date of publication and mention of the grant of the patent:
**22.08.2007 Bulletin 2007/34**

(51) Int Cl.:
***H04B 7/26*** *(2006.01)*

(21) Application number: **04008295.0**

(22) Date of filing: **24.05.2000**

(54) **Cell search procedure for TDD/CDMA communications systems**

Verfahren zur Zellensuche in TDD/CDMA-Nachrichtenübertragungssystemen

Procédure de recherche de cellule pour systèmes TDD/CDMA

(84) Designated Contracting States:
**AT BE CH CY DE DK ES FI FR GB GR IE IT LI LU MC NL PT SE**

(30) Priority: **28.05.1999 US 136664 P**

(43) Date of publication of application:
**04.08.2004 Bulletin 2004/32**

(62) Document number(s) of the earlier application(s) in accordance with Art. 76 EPC:
**00937742.5 / 1 188 260**

(73) Proprietor: **INTERDIGITAL TECHNOLOGY CORPORATION**
**Wilmington, DE 19801 (US)**

(72) Inventors:
- **Sezgin, Nadir**
  **Ledgewood, NJ 07852 (US)**
- **Ozluturk, Fatih**
  **Port Washington, NY 11050 (US)**

(74) Representative: **Henningsson, Gunnar**
**AWAPATENT AB,**
**Box 45086**
**104 30 Stockholm (SE)**

(56) References cited:
**WO-A-99/12273**

- **EUROPEAN TELECOMMUNICATIONS STANDARD INSTITUTE (ETSI): "Universal Mobile Telcommunications System (UMTS);UMTS Terrestrial Radio Access (UTRA); Concept evaluation (UMTS 30.06 version 3.0.0)" TR 101146 V3.0.0, December 1997 (1997-12), XP002131073**
- **HIGUCHI K ET AL: "FAST CELL SEARCH ALGORITHM IN DS-CDMA MOBILE RADIO USING LONG SPREADING CODES" IEEE VEHICULAR TECHNOLOGY CONFERENCE,US,NEW YORK, IEEE, vol. CONF. 47, 4 May 1997 (1997-05-04), pages 1430-1434, XP000738598 ISBN: 0-7803-3660-7**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 443 684 B1

Printed by Jouve, 75001 PARIS (FR)

## Description

BACKGROUND

This invention generally relates to spread spectrum Time Division Duplex (TDD) communication systems using Code Division Multiple Access (CDMA). More particularly, the present invention relates to cell search procedure of User Equipment (UE) within TDD/CDMA communication systems.

International patent application having publication number WO 99/12273 discloses a base station transmitting frames of information to a mobile station. Each frame is divided into a plurality of slots, and each slot includes a primary synchronization code and a secondary synchronization code. The secondary synchronization code is used by the mobile station to acquire time synchronization with the base station. Further, there exists a number $N_{s/lci}$ of possible secondary synchronization codes, and these $N_{s/lci}$ secondary synchronization codes may provide $\log_2(N_{s/lci})$ bits of information for use in conveying long code information comprising either long code group or actual long code.

**Figure 1** depicts a wireless spread spectrum TDD/CDMA communication system. The system has a plurality of base stations **$30_1$** to **$30_7$**. Each base station **$30_1$** has an associated cell **$34_1$** to **$34_7$** and communicates with user equipments (UEs) **$32_1$** to **$32_3$** in its cell **$34_1$**.

In addition to communicating over different frequency spectrums, TDD/CDMA systems carry multiple communications over the same spectrum. The multiple signals are distinguished by their respective code sequences (codes). Also, to more efficiently use the spectrum, TDD/CDMA systems as illustrated in **Figure 2** use repeating frames **38** divided into a number of time slots **$36_1$** to **$36_n$**, such as sixteen time slots 0 to 15. In such systems, a communication is sent in selected time slots **$36_1$** to **$36_n$** using selected codes. Accordingly, one frame 38 is capable of carrying multiple communications distinguished by both time slot **$36_1$** to **$36_n$** and code.

For a UE **$32_1$** to communicate with a base station **$30_1$**, time and code synchronization is required. **Figure 3** is a flow chart of the cell search and synchronization process. Initially, the UE **$32_1$** must determine which base station **$30_1$** to **$30_7$** and cell **$34_1$** to **$34_7$** to communicate. In a TDD/CDMA system, all the base stations **$30_1$** to **$30_7$** are time synchronized within a base station cluster. For synchronization with UEs **$32_1$** to **$32_7$**, each base station **$30_1$** to **$30_7$** sends a Primary Synchronization Code (PSC) and several Secondary Synchronization Code (SSC) signals in the time slot dedicated for synchronization. The PSC signal has an associated chip code, such as an unmodulated 256 hierarchical code, and is transmitted in the dedicated time slot, step 46. To illustrate, a base station **$30_1$** may transmit in one or two time slots, such as for a system using time slots 0 to 15 in time slot K or slot K+8, where K is either 0, ..., 7.

One technique used to generate a PSC signal is to use two 16 hierarchical sequences, such as X1 and X2 in **Equations 1** and **2**.

$$X1 = [1, 1, -1, -1, 1, -1, 1, -1, -1, -1, -1, -1, 1, 1, 1, -1] \qquad \textbf{Equation 1}$$

$$X2 = [1, 1, -1, -1, -1, -1, 1, -1, 1, 1, -1, 1, 1, 1, -1, 1] \qquad \textbf{Equation 2}$$

**Equation 3** illustrates one approach to generate a 256 hierarchal code, y(i), using X1 and X2.

$$y(i) = X1\ (i \bmod 16) \times X2\ (i \operatorname{div} 16), \text{ where } i = 0, \ldots, 255 \qquad \textbf{Equation 3}$$

Using y(i), the PSC is generated such as by combining y(i) with the first row of length 256 Hadamard matrix, $h_0$ to produce $C_p(i)$ as in **Equation 4**.

$$C_p(i) = y(i) \times h_0(i), \text{ where } i = 0, \ldots, 255 \qquad \textbf{Equation 4}$$

Since the first row of the Hadamard matrix is an all one sequence, **Equation 4** reduces to **Equation 5**.

$$C_p(i) = y(i), \text{ where } i = 0, \ldots, 255 \qquad \textbf{Equation 5}$$

The $C_p(i)$ is used to produce a spread spectrum PSC signal suitable for transmission.

To prevent the base stations' communications from interfering with each other, each base station **$30_1$** to **$30_7$** sends its PSC signal with a unique time offset, $t_{offset}$ from the time slot boundary **40**. Differing time offsets are shown for time slot **42** in **Figure 4**. To illustrate, a first base station **$30_1$** has a first time offset **$44_1$, $t_{offset}$**, for the PSC signal, and a second base station **$30_2$**, has a second time offset **$44_2$, $t_{offset2}$**.

To differentiate the different base stations **$30_1$** to **$30_7$** and cells **$34_1$** to **$34_7$** each base station **$30_1$** to **$30_7$** within the cluster is assigned a different group of codes (code group). One approach for assigning a **$t_{offset}$** for a base station using an $n^{th}$ code group **$44_n$**, $t_{offset,n}$ is **Equation 6**.

$$t_{offset,n} = n \cdot 71T_c \qquad \textbf{Equation 6}$$

$T_c$ is the chip duration and each slot has a duration of 2560 chips. As a result, the offset **$42_n$** for each sequential code group is spaced 71 chips.

Since initially the UE **$32_1$** and the base stations **$30_1$** to **$30_7$** are not time synchronized, the UE **$32_1$** searches through every chip in the frame **38** for PSC signals. To accomplish this search, received signals are inputted to a matched filter which is matched to the PSC signal's chip code. The PSC matched filter is used to search through all the chips of a frame to identify the PSC signal of the base station **$30_1$** having the strongest signal. This process is referred to as step-1 of cell search procedure.

After the UE **$32_1$** identifies the PSC signal of the strongest base station **$30_1$**, the UE **$32_1$** needs to determine the time slot **$36_1$** to **$36_n$** in which that PSC and SSC signals are transmitted (referred to as the Physical Synchronization Channel (PSCH) time slot) and the code group used by the identified base station **$30_1$.** This process is referred to as step-2 of cell search procedure. To indicate the code group assigned to the base station **$30_1$** and the PSCH time slot index, the base station **$30_1$** transmits signals having selected secondary synchronization codes (SSCs), step **48.** The UE **$32_1$** receives these SSC signals, step **50,** and identifies the base station's code group and PSCH time slot index based on which SSCs were received, step **52.**

For a TDD system using 32 code groups and two possible PSCH time slots per frame, such as time slots K and K+8, one approach to identify the code group and PSCH time slot index is to send a signal having one of 64 SSCs. Each of the synchronization codes corresponds to one of the 32 code groups and two possible PSCH time slots. This approach adds complexity at the UE $32_1$ requiring at least 64 matched filters and extensive processing. To identify the code group and PSCH time slot index, 17,344 real additions and 128 real multiplications are required in each PSCH time slot and 64 real additions are required for the decisions.

An alternative approach for step-2 of cell search procedure uses 17 SSCs. These 17 SSCs are used to index the 32 code groups and two possible PSCH time slots per frame. To implement this approach, at least 17 matched filters are required. To identify the code group and time slot, 1,361 real additions and 34 real multiplications are required for each PSCH time slot. Additionally, 512 real additions are required for the decision.

It would be desirable to reduce the complexity required by a UE **$32_1$** to perform cell search procedure.

SUMMARY

A base station sends a synchronization signal in an assigned time slot to a user equipment in a time division duplex code division multiple access communication system. The base station has an assigned code group out of a predetermined number of code groups. The base station transmits selected secondary synchronization code signals out of a set of secondary synchronization code signals. The plurality of secondary synchronization code signals numbers less than half of the predetermined number of code groups. The user equipment identifies the transmitted selected secondary code signals. Based on in part the identified secondary synchronization code signals, the assigned code group is determined.

## BRIEF DESCRIPTION OF THE DRAWINGS

**Figure 1** illustrates a prior art TDD/CDMA system

**Figure 2** illustrates time slots in repeating frames of a TDD/CDMA system.

**Figure 3** is a flow chart of cell search.

**Figure 4** illustrates time offsets used by differing base stations sending primary synchronization code signals.

**Figure 5** is a diagram of the simplified components of a user equipment and a base station using binary phase shift keying modulation for cell search.

**Figure 6** is a flow chart of secondary synchronization code assignment.

**Figure 7** illustrates the simplified components of a user equipment and a base station using quadrature phase shift keying modulation for cell search.

**Figure 8** illustrates the simplified components of a user equipment and a base station reducing the maximum number of transmitted secondary synchronization codes using quadrature phase shift keying modulation.

**Figures 9** to **17** are graphs depicting the performance of various synchronization systems under varying simulated channel conditions.

DETAILED DESCRIPTION OF THE PREFERRED EMBODIMENTS

The preferred embodiments will be described with reference to the drawing figures where like numerals represent like elements throughout. **Figure 5** shows the simplified circuitry of a base station $\mathbf{30_1}$ and a UE $\mathbf{32_1}$ for use in cell search. During step-1 of the cell search, the base station $\mathbf{30_1}$ generates a PSC signal using a PSC spread spectrum signal generator **66** having the time offset in the time slot **42** associated with the base station $\mathbf{30_1}$. The PSC signal is combined by a combiner **63** with M SSC signals. The combined signal is modulated by a modulator **62** to carrier frequency. The modulated signal passes through an isolator **60** and is radiated by an antenna **58** or, alternately, an antenna array.

The UE $\mathbf{32_1}$ receives signals using an antenna **70** or, alternately, an antenna array. The received signals are passed through an isolator **72** where they are demodulated by a demodulator **74** to baseband frequency. During step-1 of the cell search, the PSC matched filter **76** is used by the processor **80** to search through all the chips of a frame **38** to identify the PSC signal of the base station $\mathbf{30_1}$ having the strongest signal.

One approach for detection of a PSC signal location in a frame is as follows. A selected number of positions in the received signal frame, such as forty, having the highest number of accumulated chip matches (i.e. maximum signal strength), are repeatedly correlated at the same positions in subsequent frames **38.** Out of the selected locations, the one having the highest number of cumulative matches (i.e. the maximum signal strength) is identified as the location of the PSC signal.

For step-2 of the cell search procedure, the base station $\mathbf{30_1}$ generates SSC signals, $SSC_1$ to $SSC_M$, using SSC spread spectrum signal generators $\mathbf{68_1}$ to $\mathbf{68_M}$. To reduce the complexity at the UE $\mathbf{32_1}$, a reduced number of SSCs are used. By reducing the SSCs, the number of matched filters required at the UE $\mathbf{32_1}$ is reduced. Additionally, the reduced SSCs decreases the processing resources required to distinguish the different codes. The reduced SSCs also reduces the probability of incorrect detection of a code group number and PSCH time slot index (see **Figures 9-15).**

Oneapproach to reduce the SSCs is shown in the flow chart of **Figure 6.** The number of SSCs used, M, is based on the number of code groups and PSCH time slots used per frame, step **54**. The number of SSCs, M, is the log base two of the maximum combination number rounded up to the next higher integer, step **56**, as in **Equation 7.**

$$M = \log_2 (\text{\# of Code Groups x \# of PSCH Time Slots per frame}) \qquad \textbf{Equation 7.}$$

The base station $\mathbf{30_1}$ generates, using SSC signal generators $\mathbf{68_1}$ to $\mathbf{68_M}$, the SSC signals associated with the base station's code group and the number of PSCH time slots per frame. The SSC signals are combined with each other as well as the PSC signal by combiner **63**. Subsequently, the combined signal is modulated by the modulator **62**, passed through the isolator **60** and radiated by the antenna **58**. The UE $\mathbf{32_1}$ receives the transmitted signal, passes it through the isolator **72** and demodulates the received signal using the demodulator **74.** Using corresponding $SSC_1$ to $SSC_M$ matched filters $\mathbf{78_1}$ to $\mathbf{78_M}$, the processor **80** determines the binary code that SSCs are modulated. Based on the determined binary code, the base station's code group and PSCH time slot index in the frame is determined. To illustrate for a system using 32 code groups and two possible time slots per frame, such as slots K and K+8, the number of binary bits needed to modulate SSCs, M, is six ($\log_2$ 64). In such a system, the six SSCs are modulated with six bits using binary phase shift keying (BPSK) modulation. The six SSCs are chosen among the 256 rows of Hadamard matrix $H_8$. The Hadamard matrix is generated sequentially, such as by **Equations 8** and **9**.

$$H_0 = (1) \quad \text{Equation 8}$$

$$H_t = \begin{bmatrix} H_{t-1} & H_{t-1} \\ H_{t-1} & \bar{H}_{t-1} \end{bmatrix}, t = 1,...,8 \quad \text{Equation 9}$$

A particular code, $C_{k,n}(i)$, where n is the code group number associated with an SSC is produced using **Equation 10.** The six rows of Hadamard matrix, $H_8$, are r(k) = [24, 40, 56, 104, 120, 136].

$$C_{k,n}(i) = b_{k,n} \times h_{r(k)}(i) \times y(i), \text{ where } i = 0, 1, ..., 255 \text{ and } k = 1, ..., 6$$

**Equation 10**

The value of $b_2$ to $b_6$ are depicted in **Table 1.**

**Table 1**

| Code Group (n) | $b_{6.n}$ | $b_{5.n}$ | $b_{4.n}$ | $b_{3.n}$ | $b_{2.n}$ |
|---|---|---|---|---|---|
| 1 | +1 | +1 | +1 | +1 | +1 |
| 2 | +1 | +1 | +1 | +1 | -1 |
| 3 | +1 | +1 | +1 | -1 | +1 |
| ... | ... | ... | ... | ... | ... |
| 32 | -1 | -1 | -1 | -1 | -1 |

The value of $b_{1n}$ is depicted in **Table 2**.

**Table 2**

| PSCH time slot order in the frame | $b_{1,n}$ |
|---|---|
| K, where K = 0,...,7 | +1 |
| K + 8 | -1 |

Each code corresponds to one SSC, $SSC_1$ to $SSC_6$. To distinguish the differing base stations' SSC signals from one another, each of the base stations' SSC signals has the same offset as its PSC signal. At the UE **$32_1$,** the step-2 of the cell search procedure (i.e. code group number and PSCH slot order detection) is performed as follows. The received baseband signal is first correlated with $C_p$ as per **Equation 4** to obtain phase reference. This correlation is performed by PSC matched filter **76** in **Figure 5**. The phase reference is obtained by normalizing the correlation value obtained at the output of the PSC matched filter **76**. The received baseband signal is also correlated with C1,...,C6 as per **Equation 10** to obtain binary data that represent the code group of the base station **$30_1$** and PSCH slot order in the frame. This correlation is performed by SSC matched filters **$78_1$-$78_M$** in **Figure 5.** These matched filter outputs are derotated before BPSK demodulation. The derotation is performed by complex multiplication of the complex conjugate of the phase reference. The derotated SSC matched filter outputs are BPSK demodulated. The BPSK demodulation is performed by a hard limiter on the real part of the derotated SSC matched filter outputs. As a result, if the real part of the derotated SSC matched filter output is greater than zero, it is demodulated as +1. Otherwise, it is demodulated as -1. The demodulated binary data represents the code group of the base station **$30_1$** and the PSCH time slot order in the frame as depicted in **Table 1** and **Table 2**, respectively. To ease detection of the six SSCs, the UE **$32_1$** accumulates the derotated outputs of the SSC matched filters **$78_1$-$78_M$** over a number of the PSCH time slots, such as four or eight.

Using six SSCs, for 32 code groups and two possible PSCH time slots, requires 653 real additions and 28 real multiplications at the UE **$32_1$** to identify the code group/PSCH time slot index. For the decision, no additions or multiplications are required. Accordingly, reducing the number of transmitted SSCs in the PSCH time slot reduces the processing

at the UE **$32_1$.**

Alternately, to reduce the number of SSCs even further quadrature phase shift keying (QPSK) modulation is used. To reduce the SSC number, each SSC signal is sent on either an In-phase (I) or Quadrature (Q) component of the PSCH. One extra bit of data associated with either using the I or Q carrier is used to distinguish the code group/ PSCH time slots. As a result, the number of SSCs, M, required by **Equation 6** is reduced by one.

For instance, to distinguish 32 code groups and two possible PSCH time slots, five SSCs (M = 5) are required. The code groups are divided in half (code groups 1-16 and code groups 17-32). When the SSCs are transmitted on the I carrier, it restricts the code groups to the lower half (code groups 1-16) and when the SSCs are transmitted on the Q carrier, it restricts the code groups to the upper half (code groups 17-32). The five SSCs distinguish between the remaining sixteen possible code groups and two possible PSCH time slots.

A simplified base station **$30_1$** and UE **$32_1$** using QPSK modulation are shown in **Figure 7.** The base station **$30_1$** generates the appropriate SSC signals for its code group and PSCH time slot using the SSC spread spectrum signal generators **$68_1$** to **$68_M$.** Also based on the base station's code group/PSCH time slot index, switches **$90_1$** to **$90_M$** either switch the outputs of the generators **$68_1$** to **$68_M$** to an I combiner 86 or a Q combiner **88.** The combined I signal which includes the PSC signal is modulated by an **I** modulator **82** prior to transmission. The combined Q signal is modulated by a Q modulator **84** prior to transmission. One approach to produce the Q carrier for modulating the signal is to delay the I carrier by ninety degrees by a delay device **98**. The UE **$32_1$** demodulates the received signals with both an **I** demodulator **92** and a Q demodulator **94.** Similar to the base station **$30_1$**, the UE **$32_1$** may produce a Q carrier for demodulation using a delay device **96.** Obtaining binary data representing the lower or higher half of the 16 code groups and PSCH time slot index is the same as applying BPSK demodulation on the I and Q components of the received signal respectively. The I matched filters **$100_1$** to **$100_M$** are used by the processor **80** to determine whether any SSC signals were sent on the I component of the PSCH. A decision variable, $I_{dvar}$, is obtained such as by using **Equation 11.**

$$I_{dvar} = |rx_1| + |rx_2| + ... + |rx_m| \qquad \textbf{Equation 11}$$

$|rx_i|$ is the magnitude of the real component (I component) of the $i^{th}$ SSC matched filter output. Likewise, the Q matched filters **$102_1$** to **$102_M$** are used by the processor **80** to determine whether any SSC signals were sent on the Q component of the PSCH. A decision variable, $Q_{dvar}$, is obtained such as by using **Equation 12**.

$$Q_{dvar} = |ix_1| + |ix_2| + ... + |ix_M| \qquad \textbf{Equation 12}$$

$|ix_i|$ is the magnitude of the imaginary (Q component) of the $i^{th}$ SSC matched filter output.
If $I_{dvar}$ is greater than $Q_{dvar}$, the SSC signals were transmitted on the. I component. Otherwise, the SSC signals were transmitted on the Q component.

Another approach using QPSK modulation to reduce the number of SSC signals transmitted is depicted in **Figure 8**. Instead of transmitting the number of SSCs of **Figure 7**, the number of SSCs, M, representing the code group number and PSCH time slot index is reduced by one. To regain the one lost bit of information by reducing the SSCs, two sets of M SSCs are used. For instance using 32 code groups and two possible PSCH time slots, one set, $SSC_{11}$ to $SSC_{14}$, is assigned to the lower code groups, such as code groups 1 to 16, and the second set, $SSC_{21}$ to $SSC_{24}$, is assigned to the upper code groups, such as code groups 17 to 32. For the lower code group, sending $SSC_{11}$ to $SSC_{14}$ on the I carrier restricts the code groups to 1 to 8. The Q carrier restricts the code groups to 9 to 16. Likewise, for the upper code group, in phase $SSC_{21}$ to $SSC_{24}$ restricts the code groups to 17 to 24 and Q $SSC_{21}$ to $SSC_{24}$ restricts the code groups to 25 to 32. As a result, the maximum number of SSCs transmitted at one time is reduced by one. By reducing the number of SSCs, the interference between SSC signals is reduced. Reduced interference between SSCs allows higher transmission power levels for each SSC signal easing detection at the VE $32_1$.

A simplified base station **$30_1$** and UE **$32_1$** implementing the reduced SSC approach is shown in **Figure 8.** At the base station **$30_1$**, two sets of M SSC spread spectrum signal generators **$104_{11}$** to **$104_{2M}$** generate the SSC signals corresponding to the base station's code group and PSC time slot. The corresponding SSC signals are switched using switches **$106_{11}$** to **$106_{2M}$** to either an **182** or Q modulator **84** as appropriate for that base station's code group and PSCH time slot. At the UE **$32_1$**, an I set of matched filters **$108_{11}$** to **$108_{2Q}$** is used to determine if any of the SSCs were sent on the I carrier. A Q set of matched filters **$110_{11}$** to **$110_{2M}$** is used to determine if any of the SSCs were sent on the Q carrier. By detecting the transmitted I and Q SSCs, the processor **80** determines the base station's code group and PSCH time slot.

One approach to determining which of 32 code groups and two possible PSCH time slots is used by the base station **$32_1$** follows. After the processor **80** accumulates data from matched filters **$110_{11}$** to **$110_{24}$**, the code group set,

either $SSC_{11}$ to $SSC_{14}$ or $SSC_{21}$ to $SSC_{24}$, is determined using **Equations 13** and **14**.

$$var_set\ 1 = |rx_{11}| + |ix_{12}| + \ldots + |rx_{14}| + |ix_{14}| \qquad \textbf{Equation 13}$$

$$var_set\ 2 = |rx_{21}| + |ix_{22}| + \ldots + |rx_{24}| + |ix_{24}| \qquad \textbf{Equation 14}$$

The values, $rx_{11}$ to $rx_{24}$, are the number of accumulated matches for a respective SSC, $SSC_{11}$ to $SSC_{24}$, received in the I channel. Similarly, $ix_{11}$ to $ix_{24}$ are the number of accumulated matches for the Q channel for $SSC_{11}$ to $SSC_{24}$. **Equations 13** and **14** require a total of 16 real additions. var_set 1 represents the total accumulations of the first SSC set, $SSC_{11}$ to,$SSC_{14}$- var_set 2 represents the total accumulations of the second SSC set, $SSC_{21}$ to $SSC_{24}$. The processor **80** compares var_set 1 to var_set 2 and the larger of the two variables is presumed to be the SSC set transmitted by the base station **32$_1$**.

To determine whether the SSCs were transmitted on the I or Q channel, **Equations 15** and **16** are used.

$$var_I = |rx_{p1}| + \ldots + |rx_{p4}| \qquad \textbf{Equation 15}$$

$$var_Q = |ix_{p1}| + \ldots + |ix_{p4}| \qquad \textbf{Equation 16}$$

If var_set 1 is selected as being larger than var_set 2, the value of p is one. Conversely, if var_set 2 is larger, the value of p is two. var_I is the accumulated values for the selected set on the I carrier and var_Q is the accumulated values on the Q carrier. The larger of the two variables, var_I and var_Q, is presumed to be the channel that the selected set was transmitted over. By ordering the additions in **Equations 13** and **14**, the values of var_I and var_Q can be determined simultaneously with var_set 1 and var_set 2. Accordingly, determining whether the I or Q carrier was used requires no additional additions. As a result, using QPSK modulation and two SSC sets requires 803 real additions and 36 real multiplications in each time slot and 16 real additions for the decision.

**Figures 9** to **15** are graphs illustrating the performance for distinguishing 32 code groups/two PSCH time slots of systems using 32 SSCs **128**, 17 SSCs **124** and 6 SSCs **126.** The graphs show the performance for various simulated channel conditions. The simulations accumulated the SSC matches at the UE **32$_1$** over four or eight PSCH time slots and compared the probability of an incorrect synchronization to the channel's signal to noise ratio (SNR) in decibels.

The **Figure 9** simulation uses an additive white gaussian noise (AWGN) channel and accumulation over eight PSCH time slots. The **Figure 10** simulation uses a single path Rayleigh fading channel with a six kilohertz (kHz) frequency offset and accumulation over four PSCH time slots. The **Figure 11** simulation is the same as the **Figure 10** simulation except the accumulation was over eight PSCH time slots. The **Figure 12** simulation uses an ITU channel with three multipaths with a UE **32$_1$** moving at 100 kilometers per hour (km/h) and accumulation over eight PSCH time slots. The **Figure 13** simulation uses an ITU channel with three multipaths having six kilohertz (kHz) frequency offset and a UE **32$_1$** moving at 500 km/h with accumulation over eight PSCH time slots. The **Figure 14** simulation uses a single path Rayleigh channel having 10 kHz frequency offset with accumulation over eight PSCH time slots. The **Figure 15** simulation uses an ITU channel with three multipaths having 10 kHz frequency offset and the UE **32$_1$** moving at 500 km/h with accumulation over eight PSCH time slots.

Under the simulated conditions of **Figures 14** and **15**, 6 SSCs **128** outperforms the other techniques **124**, **126**. As shown in **Figures 9** to **13**, 6 SSCs **128** performs favorably in comparison to the other techniques **124, 126.**

**Figure 16** is a graph of the simulated performance of 6 SSCs **114** using BPSK and the two sets of 4 SSCs **112** using QPSK modulation. The simulation used an eight PSCH time slot accumulation of the matches for each SSC and transmission over an AWGN channel. As shown, two set QPSK modulation **112** outperformed 6 SSC BPSK modulation **114**.

**Figure 17** illustrates the performance of BPSK and two set QPSK modulation accumulating matches over four and eight PSCH time slots. The SSCs were simulated as being transmitted over a single path Rayleigh channel. Performance for both modulation schemes improves with additional time slot correlations. Two set QPSK modulation for four PSCH time slots **116** and eight PSCH time slots **120** outperforms BPSK modulation for four PSCH time slots **118** and eight PSCH time slots 122, respectively.

## Claims

1. A method of indicating a code group out of N code groups that a time division duplex (TDD) base station (30) belongs to, the method being **characterized in that** it comprises the step of :

   transmitting (48) a primary synchronization code along with a plurality of secondary synchronization codes from the TDD base station, the plurality of secondary synchronization codes being selected to be less than ($log_2N$) +1 by means of calculating the number M of said plurality of secondary synchronization codes as the log base two of the product of the number of code groups and the physical synchronization channel time slots per frame, and the secondary synchronization codes being quadrature phase shift keying modulated; wherein the code group of the TDD base station is indicated by the transmitted plurality of secondary synchronization codes.

2. The method of claim 1 wherein each of the secondary synchronization codes are derived from a row of a Hadamard matrix.

3. The method of claim 1 wherein the value of N is 32.

4. The method of claim 3 wherein the 32 code groups are divided into multiple code groups and each of the multiple code groups is identified using a different set of secondary synchronization codes.

5. The method of claim 4 wherein the 32 code groups are divided in half where a lower half has codes 1-16 and an upper half has codes 17-32.

6. A time division duplex (TDD) base station (30) having a code group out of N code groups, said base station being **characterized in that** it comprises:

   means (58) for transmitting (48) a primary synchronization code along with a plurality of secondary synchronization codes from the TDD base station, the plurality of secondary synchronization codes being selected to be less than ($log_2N$)+1 by means of calculating the number M of said plurality of secondary synchronization codes as the log base two of the product of the number of code groups and the physical synchronization channel time slots per frame, and the secondary synchronization codes being quadrature phase shift keying modulated; wherein the code group of the TDD base station is indicated by the transmitted plurality of secondary synchronization.

7. The TDD base station (30) of claim 6 wherein each of the secondary synchronization codes are derived from a row of a Hadamard matrix.

8. The TDD base station (30) of claim 6 wherein the value of N is 32.

9. The TDD base station (30) of claim 8 wherein the 32 code groups are divided into multiple code groups and each of the multiple code groups is identified using a different set of secondary synchronization codes.

10. The TDD base station (30) of claim 9 wherein the 32 code groups are divided in half where a lower half has codes 1-16 and an upper half has codes 17-32.

11. A time division duplex (TDD) user equipment (32) for synchronizing to a TDD base station (30), the user equipment being **characterized in that** it comprises:

    means (70) for receiving a primary synchronization code along with a plurality of secondary synchronization codes from a TDD base station, the TDD base station to be synchronized with having a code group out of N code groups, the plurality of secondary synchronization codes being selected by the TDD base station to be less than ($log_2N$)+1 by means of calculating the number M of said plurality of secondary synchronization codes as the log base two of the product of the number of code groups and the physical synchronization channel time slots per frame, and
    means (92, 94, 96) for quadrature phase shift keying demodulating the secondary synchronization codes; the receiving means further comprising

a number of M matched filters (100, 102) for the I and Q branch of the demodulation means, respectively, corresponding to the M received secondary synchronization codes wherein the user equipment identifies the code group of the TDD base station by filtering the received plurality of secondary synchronization codes.

**12.** The TDD user equipment (32) of claim 6 wherein each of the secondary synchronization codes are derived from a row of a Hadamard matrix.

**13.** The TDD user equipment (32) of claim 6 wherein the value of N is 32.

**14.** The TDD user equipment (32) of claim 8 wherein the 32 code groups are divided into multiple code groups and each of the multiple code groups is identified using a different set of secondary synchronization codes.

**15.** The TDD user equipment (32) of claim 9 wherein the 32 code groups are divided in half where a lower half has codes 1-16 and an upper half has codes 17-32.

**Patentansprüche**

**1.** Verfahren zum Kennzeichnen einer Codegruppe aus N Codegruppen, zu denen eine Zeitmultiplexduplex- (TDD-) Basisstation (30) gehört, wobei das Verfahren **dadurch gekennzeichnet ist, daß** es den folgenden Schritt aufweist:

Senden (48) eines primären Synchronisationscodes zusammen mit mehreren sekundären Synchronisationscodes von der TDD-Basisstation, wobei die mehreren sekundären Synchronisationscodes mittels Berechnung der Anzahl M der mehreren sekundären Synchronisationscodes als der Logarithmus zur Basis zwei des Produkts der Anzahl von Codegruppen und der physikalischen Synchronisationskanalzeitschlitze pro Rahmen ausgewählt werden, so daß sie weniger als $(\log_2 N)+1$ sind, und wobei die sekundären Synchronisationscodes quadratur-umtastphasenmoduliert werden, wobei die Codegruppe der TDD-Basisstation durch die gesendeten mehreren sekundären Synchronisationscodes **gekennzeichnet** wird.

**2.** Verfahren nach Anspruch 1, wobei jeder der sekundären Synchronisationscodes aus einer Reihe einer Hadamard-Matrix abgeleitet wird.

**3.** Verfahren nach Anspruch 1, wobei der Wert von N 32 ist.

**4.** Verfahren nach Anspruch 3, wobei die 32 Codegruppen in mehrere Codegruppen unterteilt werden und jede der mehreren Codegruppen unter Verwendung eines anderen Satzes von sekundären Synchronisationscodes identifiziert wird.

**5.** Verfahren nach Anspruch 4, wobei die 32 Codegruppen in Hälften geteilt werden, wobei eine untere Hälfte Codes 1 - 16 hat und eine obere Hälfte Codes 17 - 32 hat.

**6.** Zeitmultiplexduplex- (TDD-) Basisstation (30) mit einer Codegruppe aus N Codegruppen, wobei die Basisstation **dadurch gekennzeichnet ist, daß** sie aufweist:

eine Einrichtung (58) zum Senden (48) eines primären Synchronisationscodes zusammen mit mehreren sekundären Synchronisationscodes von der TDD-Basisstation, wobei die mehreren sekundären Synchronisationscodes mittels Berechnung der Anzahl M der mehreren sekundären Synchronisationscodes als der Logarithmus zur Basis zwei des Produkts der Anzahl von Codegruppen und der physikalischen Synchronisationskanalzeitschlitze pro Rahmen ausgewählt werden, so daß sie weniger als $(\log_2 N)+1$ sind, und wobei die sekundären Synchronisationscodes quadratur-umtastphasenmoduliert werden, wobei die Codegruppe der TDD-Basisstation durch die gesendeten mehreren sekundären Synchronisationscodes **gekennzeichnet** wird.

**7.** TDD-Basisstation (30) nach Anspruch 6, wobei jeder der sekundären Synchronisationscodes aus einer Reihe einer Hadamard-Matrix abgeleitet wird.

**8.** TDD-Basisstation (30) nach Anspruch 6, wobei der Wert von N 32 ist.

**9.** TDD-Basisstation (30) nach Anspruch 8, wobei die 32 Codegruppen in mehrere Codegruppen unterteilt werden und jede der mehreren Codegruppen unter Verwendung eines anderen Satzes von sekundären Synchronisationscodes identifiziert wird.

**10.** TDD-Basisstation (30) nach Anspruch 9, wobei die 32 Codegruppen in Hälften geteilt werden, wobei eine untere Hälfte Codes 1 - 16 hat und eine obere Hälfte Codes 17 - 32 hat.

**11.** Zeitmultiplexduplex- (TDD-) Benutzergerät (32) zum Synchronisieren mit einer TDD-Basisstation (30), wobei das Benutzergerät **dadurch gekennzeichnet ist, daß** es aufweist:

eine Einrichtung (70) zum Empfangen eines primären Synchronisationscodes zusammen mit mehreren sekundären Synchronisationscodes von einer TDD-Basisstation, wobei die TDD-Basisstation, mit der synchronisiert werden soll, eine Codegruppe aus N Codegruppen hat, wobei die mehreren sekundären Synchronisationscodes mittels Berechnung der Anzahl M der mehreren sekundären Synchronisationscodes als der Logarithmus zur Basis zwei des Produkts der Anzahl von Codegruppen und der physikalischen Synchronisationskanalzeitschlitze pro Rahmen ausgewählt werden, so daß sie weniger als $(\log_2 N)+1$ sind, und
Einrichtungen (92, 94, 96) zum Quadratur-Umtastphasendemodulieren der sekundären Synchronisationscodes, wobei die Einrichtungen ferner aufweisen:

eine Anzahl von M angepaßten Filtern (100, 102) jeweils für den I- und Q-Zweig der Demodulationseinrichtungen, welche den M empfangenen sekundären Synchronisationscodes entsprechen, wobei das Benutzergerät die Codegruppe der TDD-Basisstation durch Filtern der empfangenen mehreren sekundären Synchronisationscodes identifiziert.

**12.** TDD-Benutzergerät (32) nach Anspruch 6, wobei jeder der sekundären Synchronisationscodes aus einer Reihe einer Hadamard-Matrix abgeleitet wird.

**13.** TDD-Benutzergerät (32) nach Anspruch 6, wobei der Wert von N 32 ist.

**14.** TDD-Benutzergerät (32) nach Anspruch 8, wobei die 32 Codegruppen in mehrere Codegruppen unterteilt werden und jede der mehreren Codegruppen unter Verwendung eines anderen Satzes von sekundären Synchronisationscodes identifiziert wird.

**15.** TDD-Benutzergerät (32) nach Anspruch 9, wobei die 32 Codegruppen in Hälften geteilt werden, wobei eine untere Hälfte Codes 1 - 16 hat und eine obere Hälfte Codes 17 - 32 hat.

## Revendications

**1.** Procédé permettant d' indiquer un groupe de codes parmi N groupes de codes appartenant à une station de base (30) à duplexage par répartition dans le temps (DRT), le procédé étant **caractérisé en ce qu'**il comprend les étapes consistant à :

transmettre (48) un code de synchronisation primaire avec une pluralité de codes de synchronisation secondaires à partir de la station de base DRT, la pluralité de codes de synchronisation secondaires étant sélectionnée de manière que les codes soient inférieurs à $(\log_2 N)+1$ en calculant le nombre M de ladite pluralité de codes de synchronisation secondaires en tant que logarithme base 2 du produit du nombre de groupes de codes et des intervalles de temps de voie de synchronisation physique par trame, et les codes de synchronisation secondaires étant modulés par déplacement de phase en quadrature ; dans lequel le groupe de codes de la station de base DRT est indiquée par la pluralité transmise de codes de synchronisation secondaires.

**2.** Procédé selon la revendication 1, dans lequel chacun des codes de synchronisation secondaires est dérivé d'une ligne d'une matrice de Hadamard.

**3.** Procédé selon la revendication 1, dans lequel la valeur de N est 32.

**4.** Procédé selon la revendication 3, dans lequel les 32 groupes de codes sont divisés en de multiples groupes de codes et chacun des multiples groupes de codes est identifié à l'aide d'un ensemble différent de codes de synchronisation secondaires.

5. Procédé selon la revendication 4, dans lequel les 32 groupes de codes sont divisés en deux, une moitié inférieure comprenant les codes 1 à 16 et une moitié supérieure comprenant les codes 17 à 32.

6. Station de base (30) à duplexage par répartition dans le temps (DRT) ayant un groupe de codes parmi N groupes de codes, ladite station de base étant **caractérisée en ce qu'**elle comprend :

des moyens (58) permettant de transmettre (48) un code de synchronisation primaire avec une pluralité de codes de synchronisation secondaires à partir de la station de base DRT, la pluralité de codes de synchronisation secondaires étant sélectionnée de manière que les codes soient inférieurs à ($log_2$N)+1 en calculant le nombre M de ladite pluralité de codes de synchronisation secondaires en tant que logarithme base 2 du produit du nombre de groupes de codes et des intervalles de temps de voie de synchronisation physique par trame, et les codes de synchronisation secondaires étant modulés par déplacement de phase en quadrature ; dans lequel le groupe de codes de la station de base DRT est indiquée par la pluralité transmise de codes de synchronisation secondaires.

7. Station de base DRT (30) selon la revendication 6, dans laquelle chacun des codes de synchronisation secondaires est dérivé d'une ligne d'une matrice de Hadamard.

8. Station de base DRT (30) selon la revendication 6, dans laquelle la valeur de N est 32.

9. Station de base DRT (30) selon la revendication 8, dans laquelle les 32 groupes de codes sont divisés en de multiples groupes de codes et chacun des multiples groupes de codes est identifié à l'aide d'un ensemble différent de codes de synchronisation secondaires.

10. Station de base DRT (30) selon la revendication 9, dans laquelle les 32 groupes de codes sont divisés en deux, une moitié inférieure comprenant les codes 1 à 16 et une moitié supérieure comprenant les codes 17 à 32.

11. Equipement utilisateur (32) à duplexage par répartition dans le temps (DRT) permettant une synchronisation avec une station de base DRT (30), l'équipement utilisateur étant **caractérisé en ce qu'**il comprend :

des moyens (70) permettant de recevoir un code de synchronisation primaire avec une pluralité de codes de synchronisation secondaires à partir d'une station de base DRT, la station de base DRT avec laquelle s'effectue la synchronisation ayant un groupe de codes parmi N groupes de codes, la pluralité de codes de synchronisation secondaires étant sélectionnée par la station de base DRT de manière que les codes soient inférieurs à ($log_2$N) +1 en calculant le nombre M de ladite pluralité de codes de synchronisation secondaires en tant que logarithme base 2 du produit du nombre de groupes de codes et des intervalles de temps de voie de synchronisation physique par trame, et
des moyens (92, 94, 96) permettant de démoduler par déplacement de phase en quadrature les codes de synchronisation secondaires ; le moyen de réception comprenant en outre :

un certain nombre de M filtres adaptés (100, 102) pour les branches I et Q du moyen de démodulation, respectivement, correspondant aux M codes de synchronisation secondaires reçus, dans lesquels l'équipement utilisateur identifie le groupe de codes de la station de base DRT en filtrant la pluralité de codes de synchronisation secondaires reçue.

12. Equipement utilisateur DRT (32) selon la revendication 6, dans lequel chacun des codes de synchronisation secondaires est dérivé d'une ligne d'une matrice de Hadamard.

13. Equipement utilisateur DRT (32) selon la revendication 6, dans lequel la valeur de N est 32.

14. Equipement utilisateur DRT (32) selon la revendication 8, dans lequel les 32 groupes de codes sont divisés en de multiples groupes de codes et chacun des multiples groupes de codes est identifié à l'aide d'un ensemble différent de codes de synchronisation secondaires.

15. Equipement utilisateur DRT (32) selon la revendication 9, dans lequel les 32 groupes de codes sont divisés en deux, une moitié inférieure comprenant les codes 1 à 16 et une moitié supérieure comprenant les codes 17 à 32.

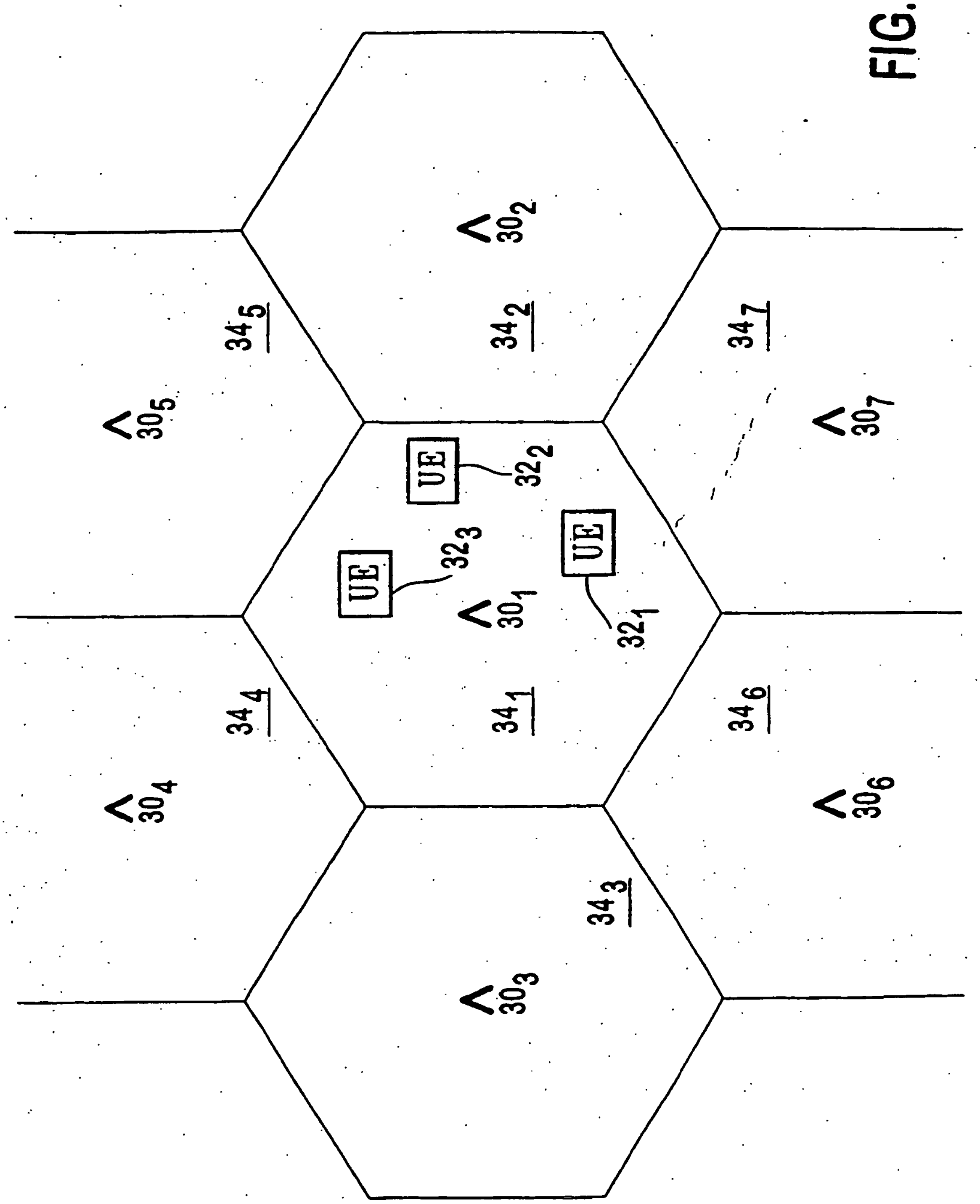
$30_1$
$30_2$
$30_3$
$30_4$
$30_5$
$30_6$
$30_7$
$34_1$
$34_2$
$34_3$
$34_4$
$34_5$
$34_6$
$34_7$
UE
UE
UE
$32_1$
$32_2$
$32_3$

FIG. 1

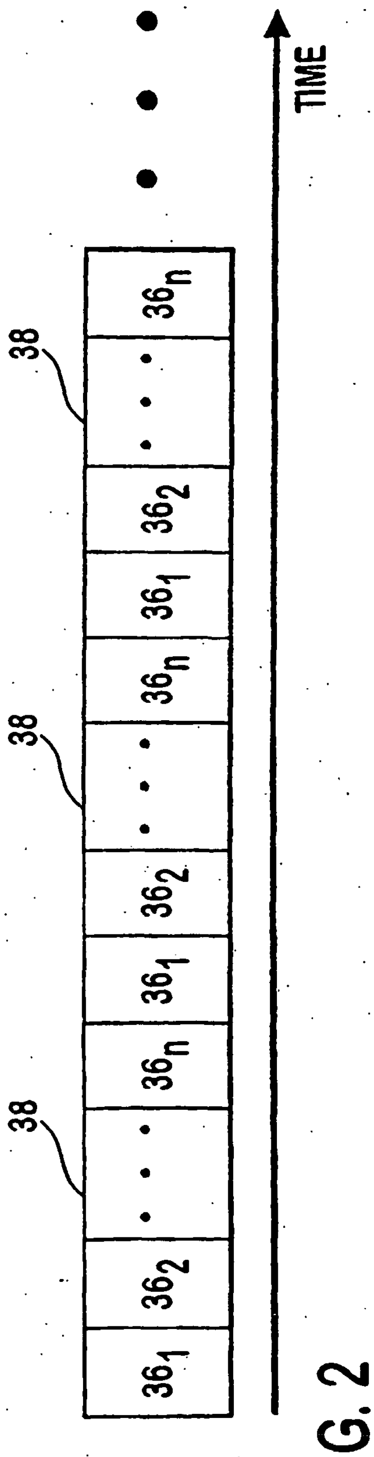
36_1
36_2
36_n
38
38
38
TIME

FIG. 2

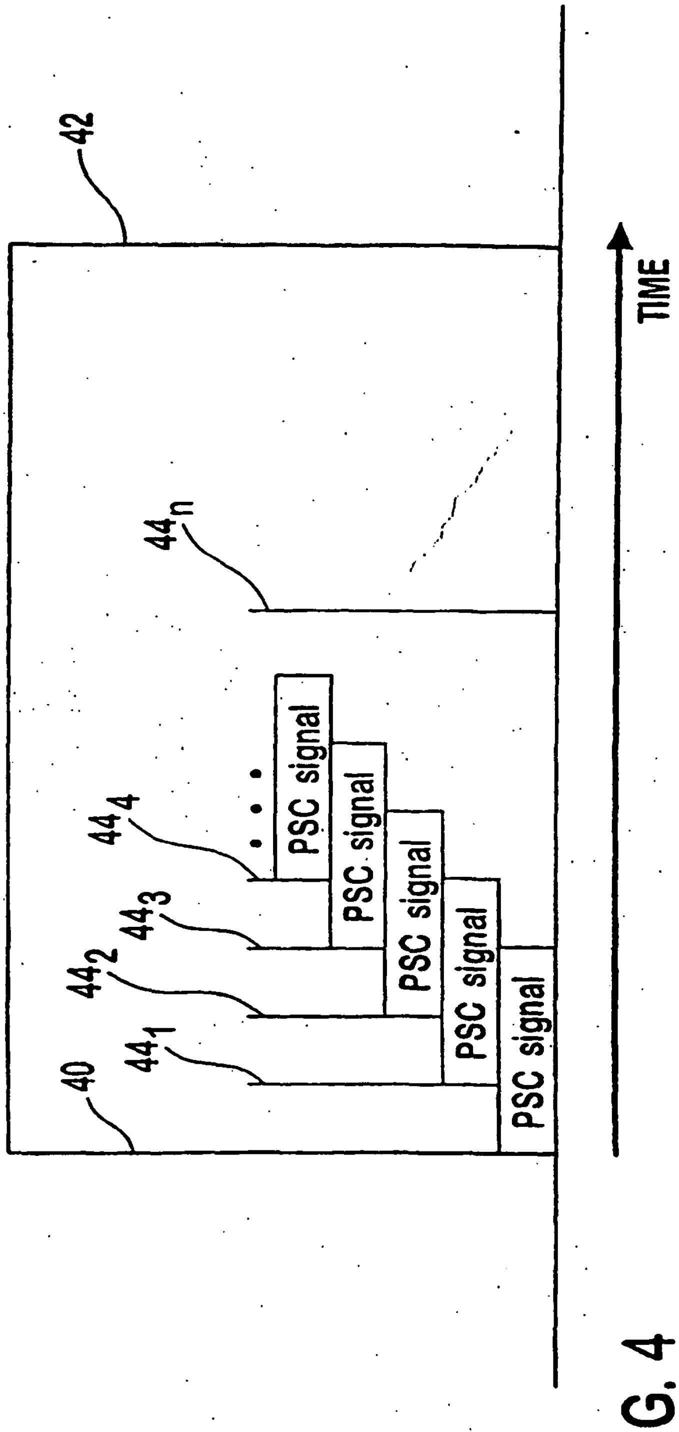
42
40
44_1
44_2
44_3
44_4
44_n
PSC signal
PSC signal
PSC signal
PSC signal
PSC signal
TIME

FIG. 4

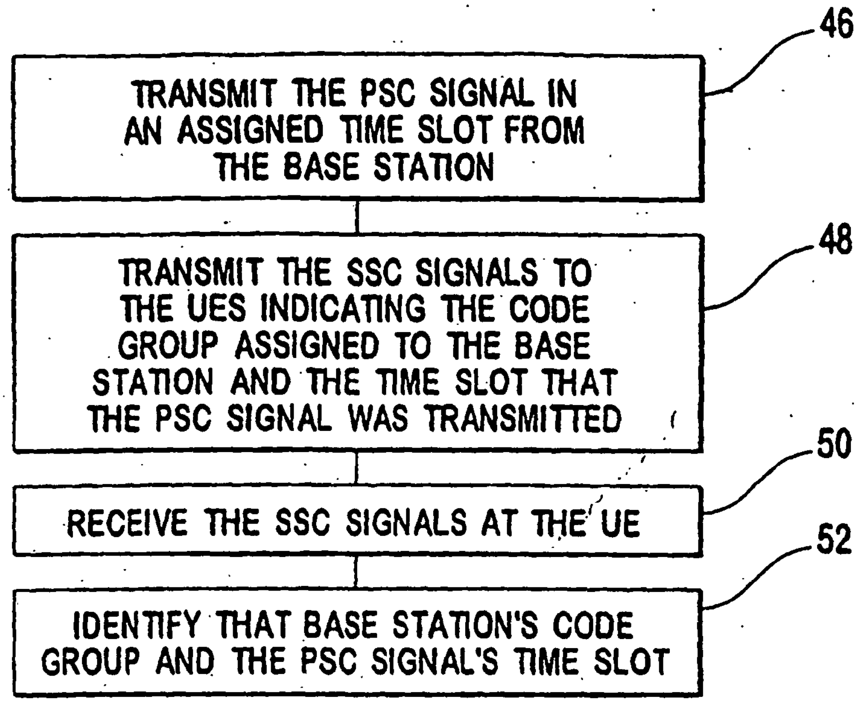
46
TRANSMIT THE PSC SIGNAL IN AN ASSIGNED TIME SLOT FROM THE BASE STATION
48
TRANSMIT THE SSC SIGNALS TO THE UES INDICATING THE CODE GROUP ASSIGNED TO THE BASE STATION AND THE TIME SLOT THAT THE PSC SIGNAL WAS TRANSMITTED
50
RECEIVE THE SSC SIGNALS AT THE UE
52
IDENTIFY THAT BASE STATION'S CODE GROUP AND THE PSC SIGNAL'S TIME SLOT

FIG. 3

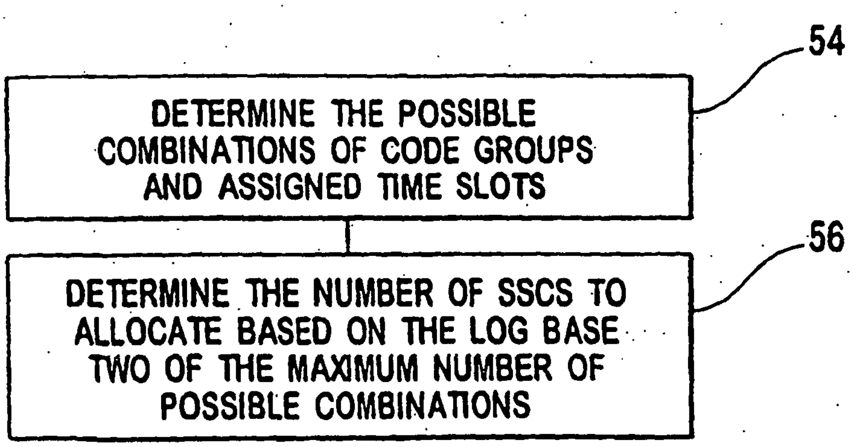
54
DETERMINE THE POSSIBLE COMBINATIONS OF CODE GROUPS AND ASSIGNED TIME SLOTS
56
DETERMINE THE NUMBER OF SSCS TO ALLOCATE BASED ON THE LOG BASE TWO OF THE MAXIMUM NUMBER OF POSSIBLE COMBINATIONS

FIG. 6

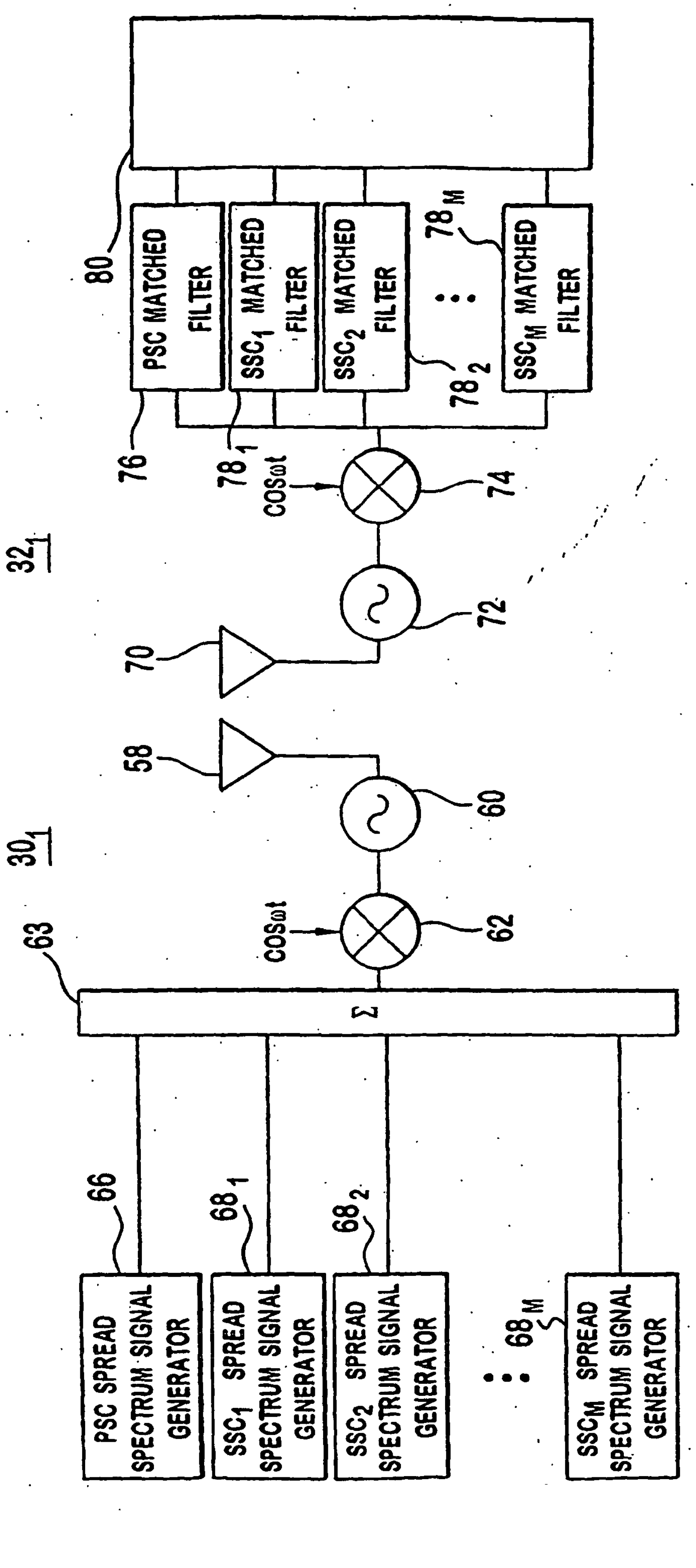
PSC SPREAD SPECTRUM SIGNAL GENERATOR
SSC1 SPREAD SPECTRUM SIGNAL GENERATOR
SSC2 SPREAD SPECTRUM SIGNAL GENERATOR
SSCM SPREAD SPECTRUM SIGNAL GENERATOR
66
681
682
68M
63
Σ
COSωt
62
60
58
301
70
72
COSωt
74
321
76
781
782
78M
80
PSC MATCHED FILTER
SSC1 MATCHED FILTER
SSC2 MATCHED FILTER
SSCM MATCHED FILTER

FIG. 5

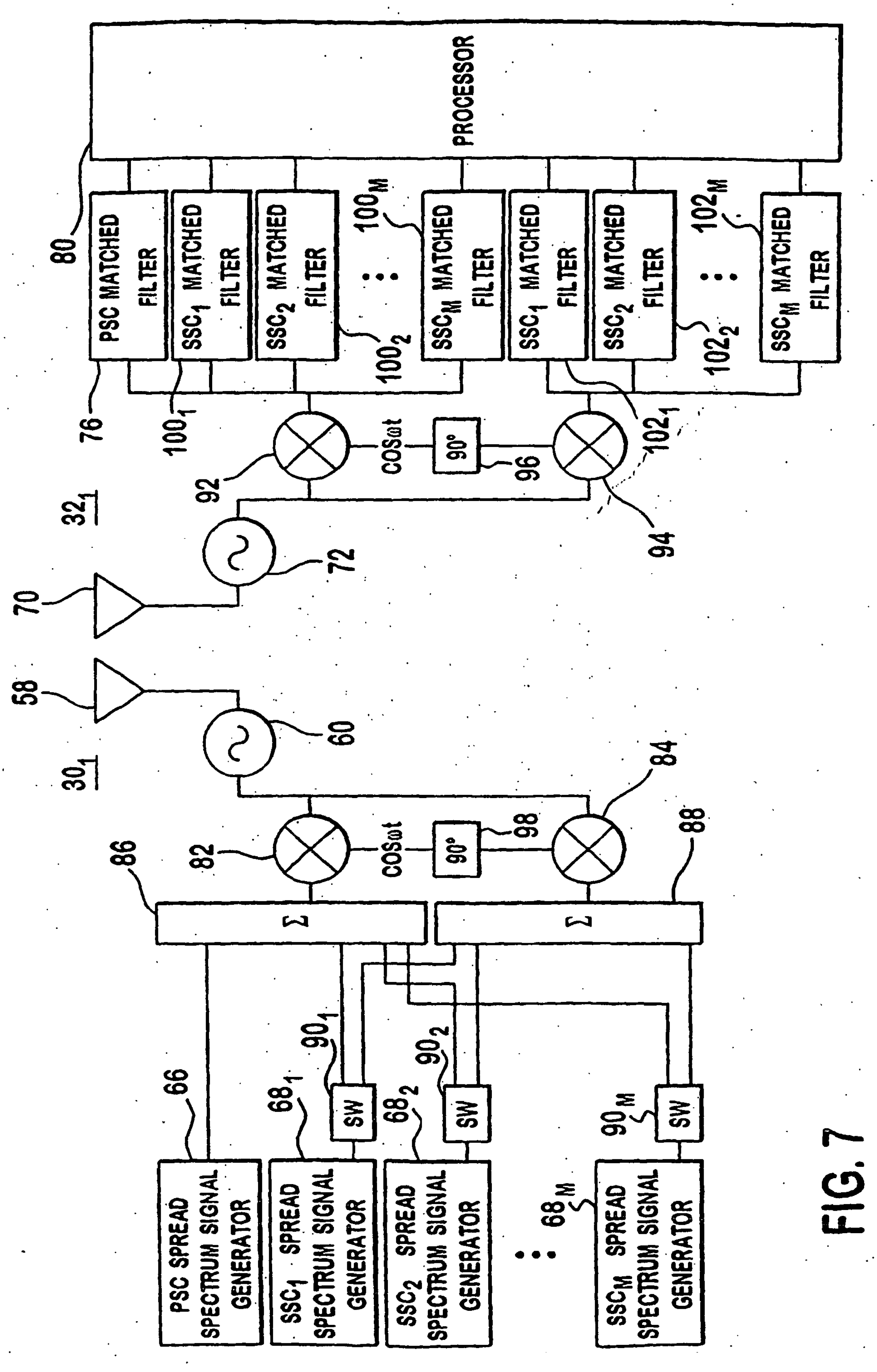
PROCESSOR
80
PSC MATCHED FILTER
76
$SSC_1$ MATCHED FILTER
$100_1$
$SSC_2$ MATCHED FILTER
$100_2$
$100_M$
$SSC_M$ MATCHED FILTER
$SSC_1$ MATCHED FILTER
$102_1$
$SSC_2$ MATCHED FILTER
$102_2$
$102_M$
$SSC_M$ MATCHED FILTER
92
COSωt
90°
96
94
$32_1$
72
70
58
60
$30_1$
84
82
COSωt
90°
98
86
88
Σ
Σ
$90_1$
$90_2$
$90_M$
SW
SW
SW
66
$68_1$
$68_2$
$68_M$
PSC SPREAD SPECTRUM SIGNAL GENERATOR
$SSC_1$ SPREAD SPECTRUM SIGNAL GENERATOR
$SSC_2$ SPREAD SPECTRUM SIGNAL GENERATOR
$SSC_M$ SPREAD SPECTRUM SIGNAL GENERATOR

FIG. 7

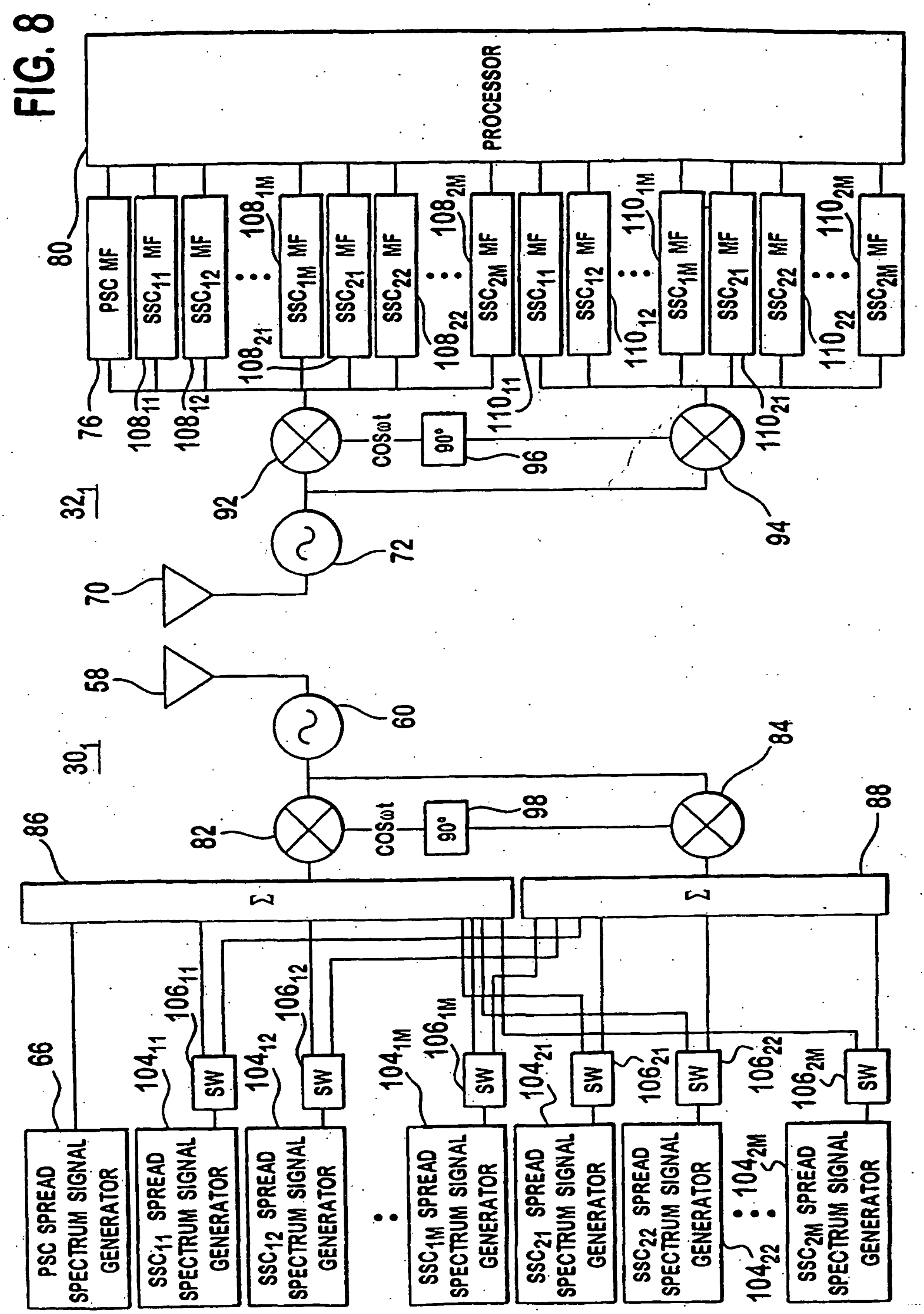
PROCESSOR
PSC MF
SSC11 MF
SSC12 MF
SSC1M MF
SSC21 MF
SSC22 MF
SSC2M MF
COSωt
90°
Σ
SW
PSC SPREAD SPECTRUM SIGNAL GENERATOR
SSC11 SPREAD SPECTRUM SIGNAL GENERATOR
SSC12 SPREAD SPECTRUM SIGNAL GENERATOR
SSC1M SPREAD SPECTRUM SIGNAL GENERATOR
SSC21 SPREAD SPECTRUM SIGNAL GENERATOR
SSC22 SPREAD SPECTRUM SIGNAL GENERATOR
SSC2M SPREAD SPECTRUM SIGNAL GENERATOR
80
76
72
70
58
60
66
82
84
86
88
92
94
96
98
30
32

FIG. 8

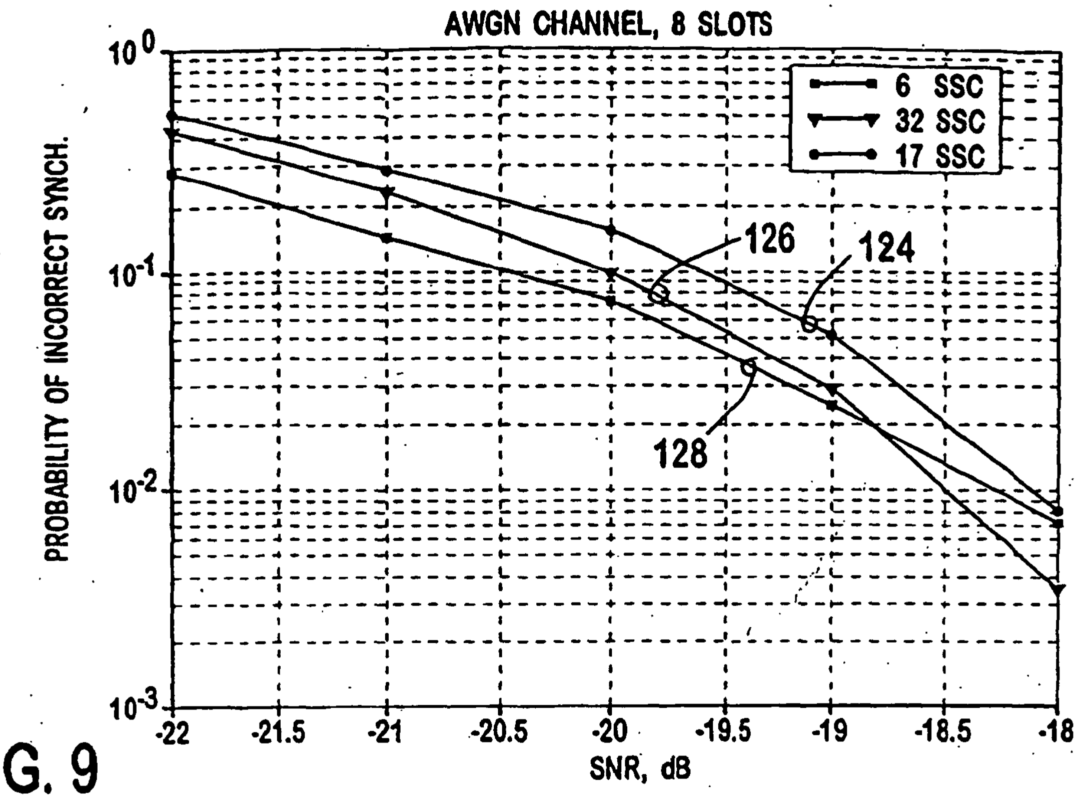
AWGN CHANNEL, 8 SLOTS
PROBABILITY OF INCORRECT SYNCH.
SNR, dB
6 SSC
32 SSC
17 SSC
126
124
128
$10^0$
$10^{-1}$
$10^{-2}$
$10^{-3}$
-22
-21.5
-21
-20.5
-20
-19.5
-19
-18.5
-18

FIG. 9

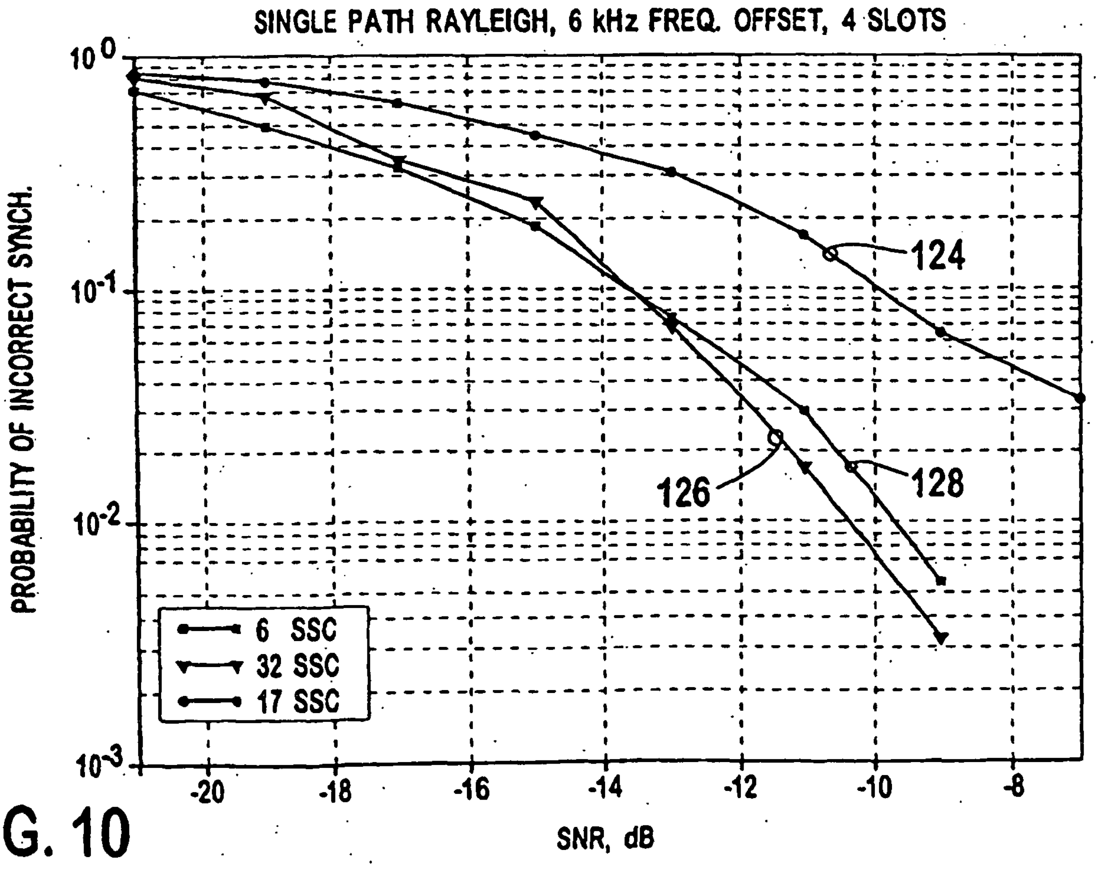
SINGLE PATH RAYLEIGH, 6 kHz FREQ. OFFSET, 4 SLOTS
PROBABILITY OF INCORRECT SYNCH.
SNR, dB
6 SSC
32 SSC
17 SSC
124
126
128
$10^0$
$10^{-1}$
$10^{-2}$
$10^{-3}$
-20
-18
-16
-14
-12
-10
-8

FIG. 10

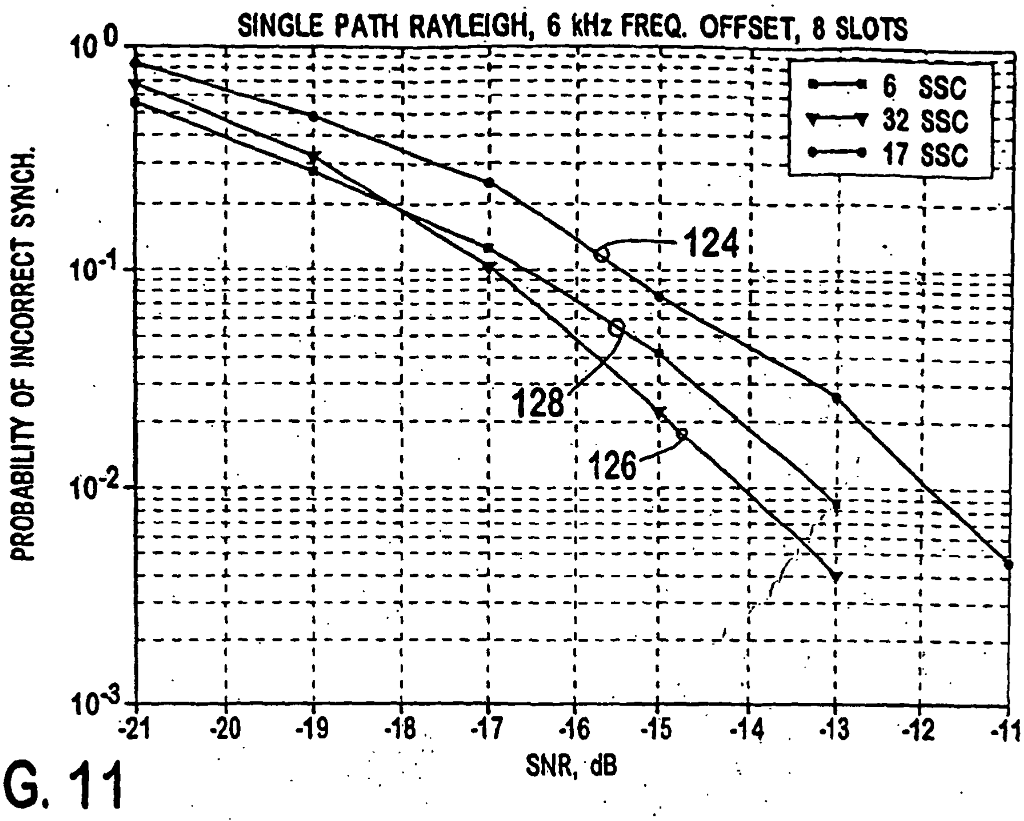
SINGLE PATH RAYLEIGH, 6 kHz FREQ. OFFSET, 8 SLOTS
PROBABILITY OF INCORRECT SYNCH.
10^0
10^-1
10^-2
10^-3
6 SSC
32 SSC
17 SSC
124
128
126
-21
-20
-19
-18
-17
-16
-15
-14
-13
-12
-11
SNR, dB

FIG. 11

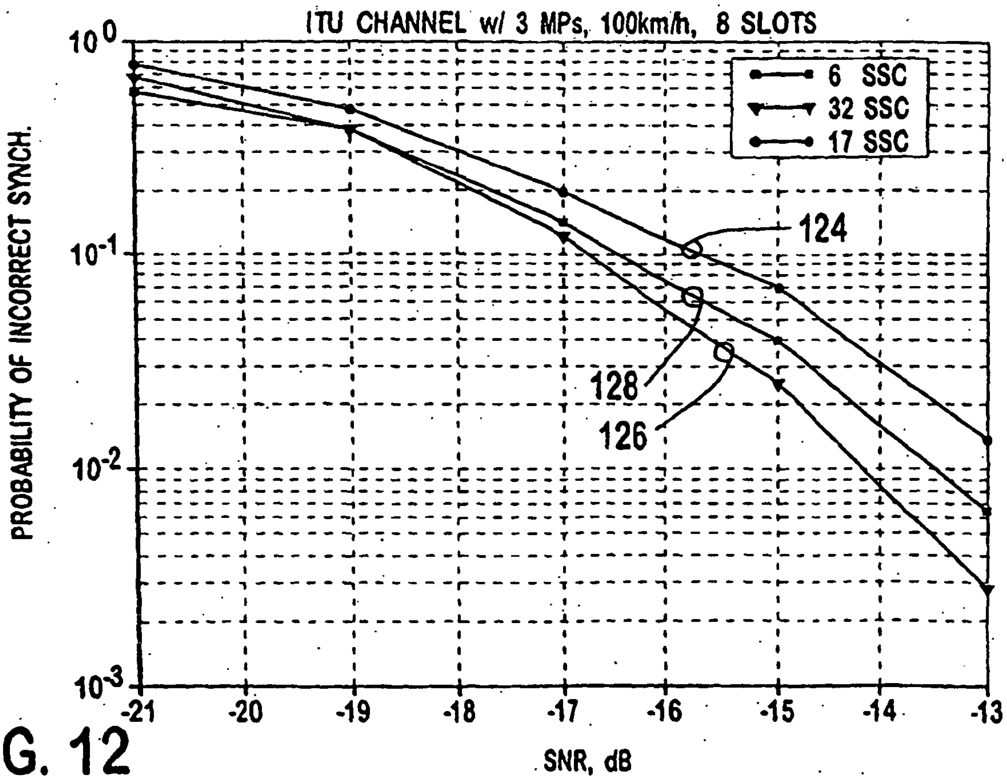
ITU CHANNEL w/ 3 MPs, 100km/h, 8 SLOTS
PROBABILITY OF INCORRECT SYNCH.
10^0
10^-1
10^-2
10^-3
6 SSC
32 SSC
17 SSC
124
128
126
-21
-20
-19
-18
-17
-16
-15
-14
-13
SNR, dB

FIG. 12

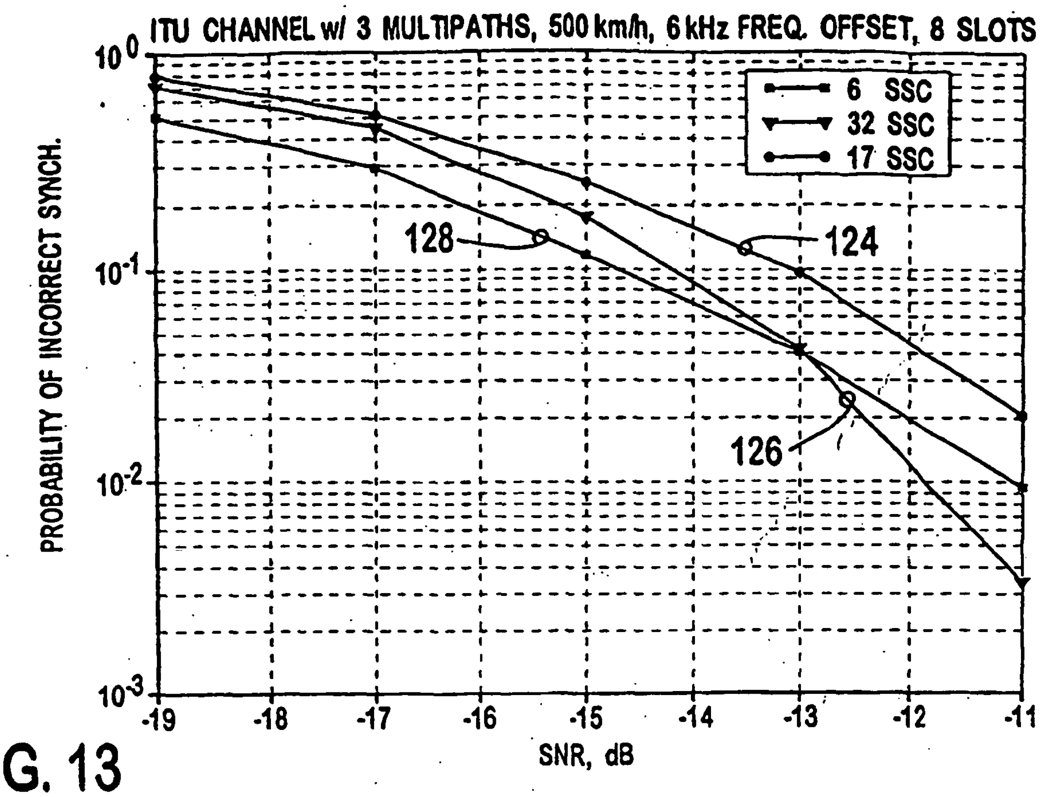
ITU CHANNEL w/ 3 MULTIPATHS, 500 km/h, 6 kHz FREQ. OFFSET, 8 SLOTS
PROBABILITY OF INCORRECT SYNCH.
10^0
10^-1
10^-2
10^-3
-19
-18
-17
-16
-15
-14
-13
-12
-11
SNR, dB
6 SSC
32 SSC
17 SSC
128
124
126

FIG. 13

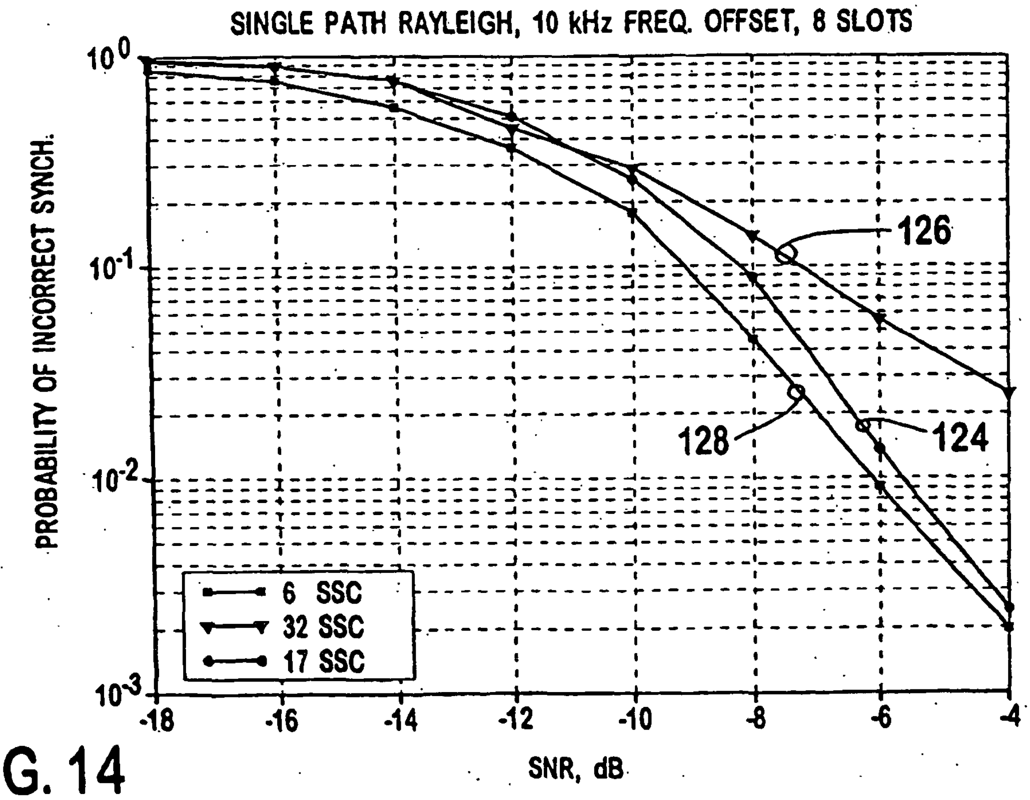
SINGLE PATH RAYLEIGH, 10 kHz FREQ. OFFSET, 8 SLOTS
PROBABILITY OF INCORRECT SYNCH.
10^0
10^-1
10^-2
10^-3
-18
-16
-14
-12
-10
-8
-6
-4
SNR, dB
6 SSC
32 SSC
17 SSC
126
128
124

FIG. 14

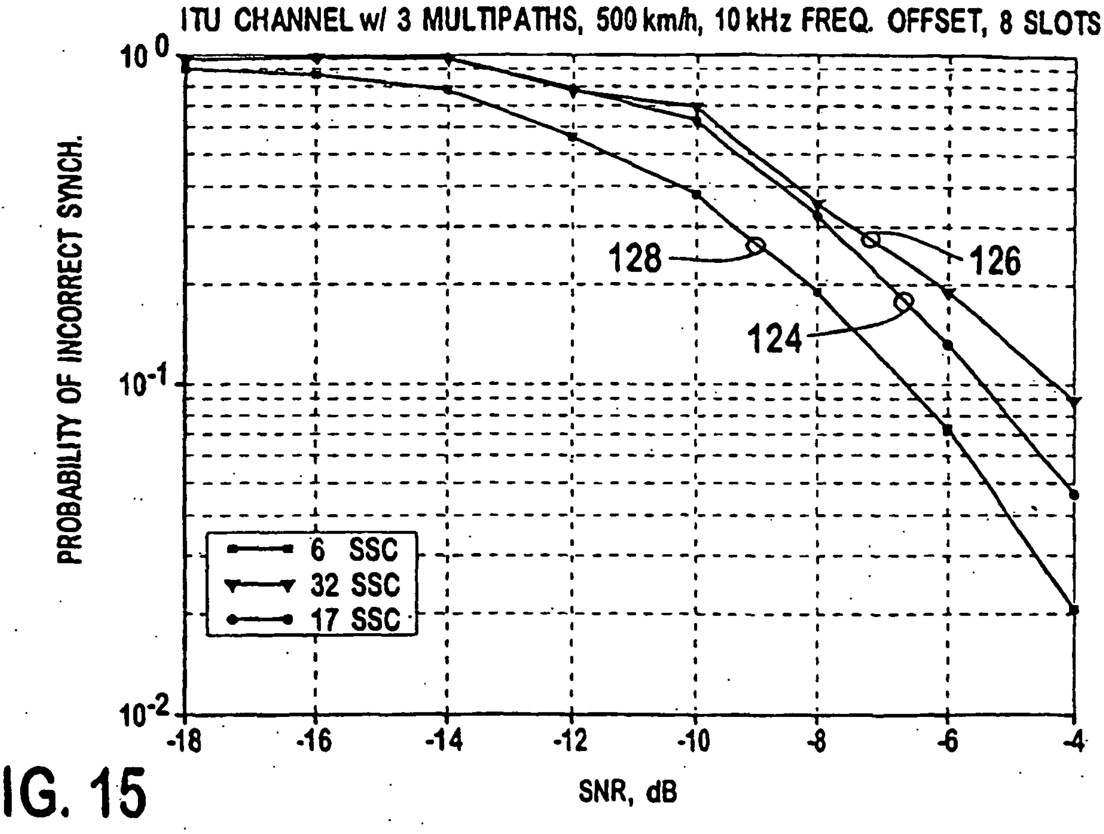
ITU CHANNEL w/ 3 MULTIPATHS, 500 km/h, 10 kHz FREQ. OFFSET, 8 SLOTS
PROBABILITY OF INCORRECT SYNCH.
10 0
10-1
10-2
-18
-16
-14
-12
-10
-8
-6
-4
SNR, dB
128
126
124
6 SSC
32 SSC
17 SSC

FIG. 15

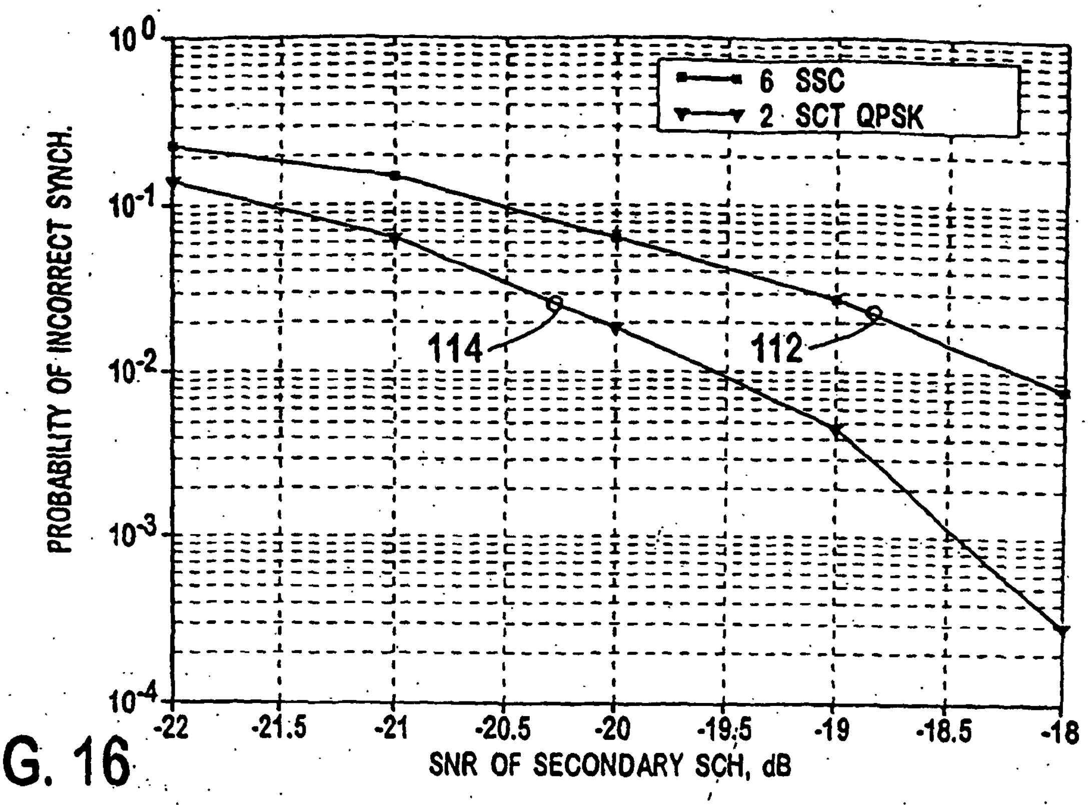
6 SSC
2 SCT QPSK
PROBABILITY OF INCORRECT SYNCH.
10^0
10^-1
10^-2
10^-3
10^-4
114
112
-22
-21.5
-21
-20.5
-20
-19.5
-19
-18.5
-18
SNR OF SECONDARY SCH, dB

FIG. 16

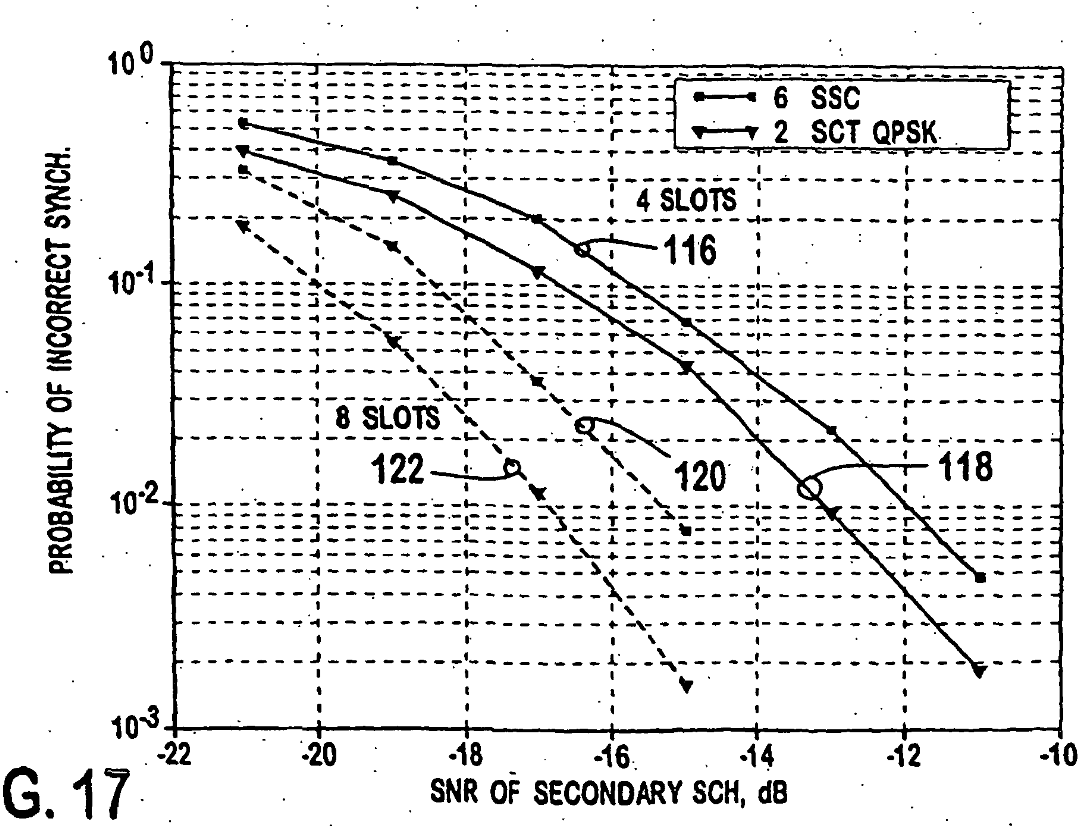
6 SSC
2 SCT QPSK
4 SLOTS
8 SLOTS
116
118
120
122
PROBABILITY OF INCORRECT SYNCH.
10^0
10^-1
10^-2
10^-3
-22
-20
-18
-16
-14
-12
-10
SNR OF SECONDARY SCH, dB

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9912273 A